(19) Europäisches Patentamt
European Patent Office
Office européen des brevets

(11) **EP 0 585 715 B1**

(12) **EUROPÄISCHE PATENTSCHRIFT**

(45) Veröffentlichungstag und Bekanntmachung des Hinweises auf die Patenterteilung:
**22.01.1997 Patentblatt 1997/04**

(51) Int. Cl.$^6$: **B23H 7/08**, B23H 7/10, B23H 7/06

(21) Anmeldenummer: **93113115.5**

(22) Anmeldetag: **16.08.1993**

(54) **Elektroerosions-Schneidvorrichtung, Elektroerosions-Schneidverfahren und Erodierdraht**

Method, apparatus and wire for electroerosion cutting

Procédé, dispositif et fil pour le découpage par électroérosion

(84) Benannte Vertragsstaaten:
**CH DE FR GB IT LI**

(30) Priorität: **26.08.1992 DE 4228328**

(43) Veröffentlichungstag der Anmeldung:
**09.03.1994 Patentblatt 1994/10**

(73) Patentinhaber: **AG für industrielle Elektronik AGIE Losone bei Locarno CH-6616 Losone/Locarno (CH)**

(72) Erfinder: **Derighetti, René, Dr. CH-6616 Losone (CH)**

(74) Vertreter: **Turi, Michael, Dipl.-Phys. et al Samson & Partner Widenmayerstrasse 5 80538 München (DE)**

(56) Entgegenhaltungen:
**CH-A- 663 370**          **FR-A- 2 477 452**

- **PATENT ABSTRACTS OF JAPAN vol. 013, no. 512 (M-893)16. November 1989 & JP-A-01 205 926 (AMADA CO LTD.) 18. August 1989**
- **PATENT ABSTRACTS OF JAPAN vol. 013, no. 560 (M-906)13. Dezember 1989 & JP-A-01 234 118 (MITSUBISHI ELECTRIC CORP.) 19. September 1989**
- **PATENT ABSTRACTS OF JAPAN vol. 013, no. 542 (M-901)5. Dezember 1989 & JP-A-01 222 823 (MITSUBISHI ELECTRIC CORP.) 6. September 1989**
- **PATENT ABSTRACTS OF JAPAN vol. 011, no. 210 (M-604)8. Juli 1987 & JP-A-62 028 122 (MITSUBISHI ELECTRIC CORP.) 6. Februar 1987**

## Beschreibung

Die vorliegende Erfindung bezieht sich auf eine Elektroerosions-Schneidvorrichtug nach dem Oberbegriff des Patentanspruchs 1, sowie auf ein Elektroerosions-Schneidverfahren nach dem Oberbegriff des Patentanspruchs 10.

Derartige Elektroerosions-Schneidvorrichtungen und Elektroerosions-Schneidverfahren sind in den vielfältigsten Ausführungsformen bekannt. Eine Elektroerosions-Schneidvorrichtung weist üblicherweise folgende Grundelemente auf: ein Maschinengestell mit Antrieben und Drahtsystem, ein Spülsystem, einen Generator sowie eine NC- oder CNC-Rechnersteuerung. Ausgehend von einer Startbohrung oder einer Referenzfläche wird mit einer ersten Elektrode - dem Erodierdraht - eine Kontur in bzw. aus dem Werkstück - der zweiten Elektrode - geschnitten. Als Erodierdraht hat sich bis heute im Grunde nur der Erodierdraht kreisrunden Querschnitts durchgesetzt.

Ein Grundanliegen bei der Weiterentwicklung des elektroersosiven Schneidens besteht darin, die Schneid- bzw. Schnittgeschwindigkeit zu erhöhen, da eine erhöhte Schneidgeschwindigkeit die Rentabilität der Elektroerosions-Schneidvorrichtung steigert. Zum Erzielen möglichst hoher Bahngeschwindigkeiten geht der Trend in der Elektroerosion fast ausschließlich in Richtung immer höherer Ströme und deswegen immer größerer Drahtdurchmesser.

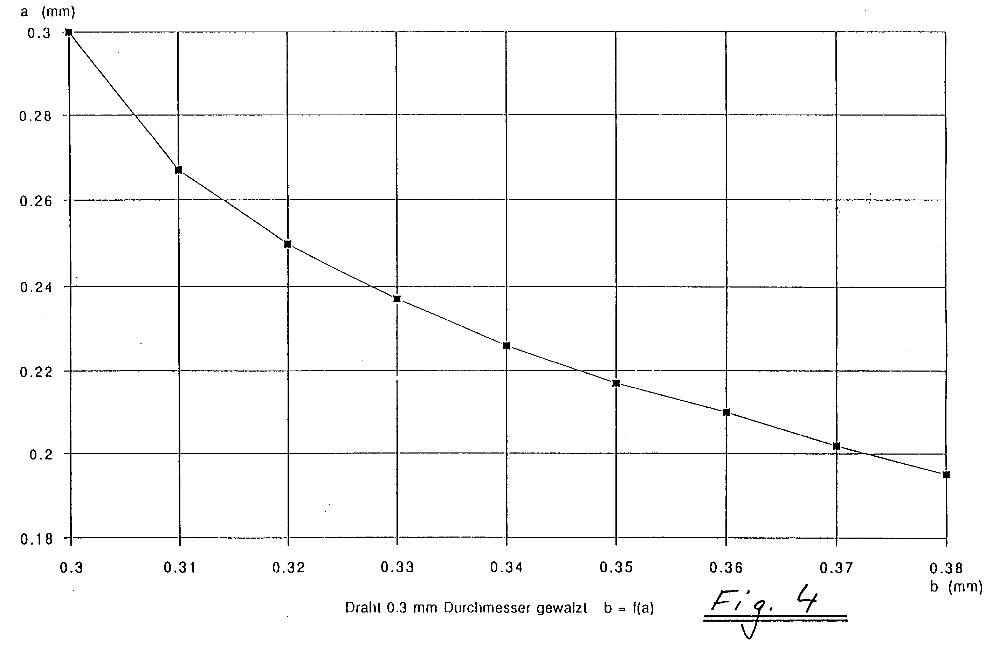

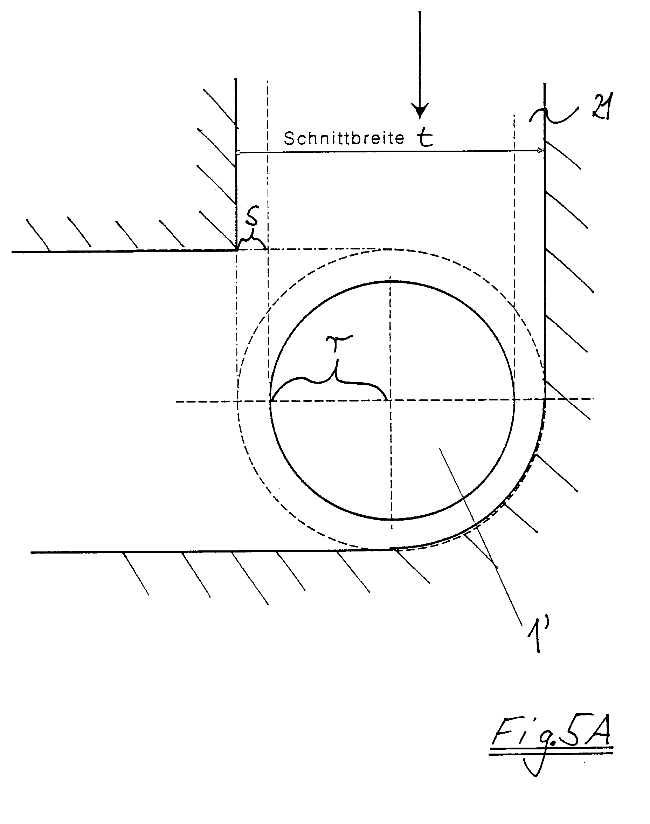

Aus der JP OS 62-28122 (veröffentlicht am 6.2.1987) ist es zwar bekannt, Drahtelektroden zu verwenden, deren Querschnitt so ausgeformt ist, daß scharfkantige Konturen von der Drahtelektrode geschnitten werden können. Dazu werden beispielsweise quadratische, dreieckige, oder auch relativ längliche Drahtelektroden (Fig. 3 der JP =S 62-28122) verwendet. Beim elektroerosiven Schneiden mit dieser Art von Elektroden wird die Bearbeitungsgeschwindigkeit - wie beispielsweise beim elektroerosiven Schneiden mit sehr dünnen Drähten - auch nicht zum Erzielen eines möglichst schmalen Bearbeitungsspaltes herabgesetzt. Dennoch gelangt das bekannte Schneidverfahren mit derartigen Erodierdrähten bereits beim Durchfahren von Kreisbögen an seine Grenzen: dann nämlich variiert bei Verwendung des länglichen Drahtes die Bearbeitungsspaltbreite je nach Lage des Erodierdrahtes zur Schnittrichtung erheblich. Nur wenn die schmalere Seite des länglichen bandartigen Erodierdrahtes genau in Schnittrichtung weist, ist die Spaltbreite minimal. Diese Bedingung wird jedoch, wie in der vorstehend erwähnten Fig. 3 der Schrift klar zu erkennen ist, nur zufällig in einer Schnittrichtung erfüllt. Wird mit der länglichen Elektrode beispielsweise ein 90°-Winkel geschnitten, differiert die Schnittbreite vor und hinter der Ecke deutlich.

Aus der gattungsbildenden JP-A 1-234118 ist eine Funkenerosionsmaschine bekannt, bei welcher der mit rundem Querschnitt angelieferte Erodierdraht vor der Bearbeitung des Werkstückes zunächst verformt und der verformte Draht darauffolgend verdrillt wird. Im verdrillten Zustand tritt der Erodierdraht dann zum Zwecke der funkenerosiven Bearbeitung in das Werkstück ein. Eine Verformung des runden Querschnitts eines Erodierdrahtes zum Zeitpunkt seiner Zufuhr zur Bearbeitungszone einer Funkenerosionsmaschine wird in der JP-A 1-205926, wie auch in der JP-A 1-222823 gezeigt.

Zudem gibt es noch Funkenerosionsmaschinen, wie beispielsweise aus der CH-A 663 270 bekannt, bei denen gleichzeitig mit zwei Erodierdrähten gearbeitet wird, was vorteilhaft für Haupt- und Feinschnitt einsetzbar ist. Selbstverständlich müssen die zwei Drähte in Abhängigkeit von der zu schneidenden Kontur im Werkstück relativ zueinander gedreht werden.

Die vorliegende Erfindung zielt darauf ab, eine Elektroerosions-Schneidvorrichtung zu schaffen, bei der die Schnittgeschwindigkeit im Vergleich zur gattungsgemäßen Elektroerosions-Schneidvorrichtung erhöhbar ist.

Ein weiteres Ziel der vorliegenden Erfindung besteht darin, ein Elektroerosions-Schneidverfahren zu schaffen, mit dem die Möglichkeiten der erfindungsgemäßen Elektroerosions-Schneidvorrichtung gut genutzt werden kann.

Das erfindungsgemäße Ziel wird bei einer gattungsgemäßen Elektroerosions-Schneidvorrichtung mit den kennzeichnenden Merkmalen des Patentanspruchs 1 erreicht.

Bei einem gattungsgemäßen Elektroerosions-Schneidverfahren wird das erfindungsgemäße Ziel mit den kennzeichnenden Merkmalen des Patentanspruchs 10 erreicht.

Die erfindungsgemäße Elektroerasions-Schneidvorrichtung erlaubt es durch ihre Walzeinrichtung in völlig unkomplizierter Weise, einen Erodierdraht derart zu verformen bzw. zu walzen, daß er nach dem Walzprozeß eine längliche Querschnittsform aufweist. Mit einer dadurch entstehenden länglichen Querschnittskontur des Erodierdrahtes ist eine Erhöhung der Schnittgeschwindigkeit möglich. Es ist zwar prinzipiell auch möglich, die Elektroerosions-Schneidvorrichtung mit einem bereits vorgewalzten Draht zu beschicken, besonders vorteilhafte Möglichkeiten ergeben sich jedoch durch die Kombination aus Verformeinrichtng und Dreheinrichtung.

Bei einer besonders bevorzugten Ausführungsform der Erfindung weist die Einrichtung zum Verformen zwei einander gegenüberliegende Einzelwalzen auf, zwischen denen der Erodierdraht geführt ist, wobei der Abstand der einander gegenüberliegenden Einzelwalzen zueinander verstellbar ist (Anspruch 2). Die derart ausgestaltete Verformeinrichtung besitzt einen unkomplizierten Aufbau und ist gut in die Erosionsvorrichtung integrierbar. Außerdem ist es durch die Verstellbarkeit des Abstandes der Einzelwalzen zueinander auf einfache Weise möglich, die Verformung des Erodierdrahtes "nach Wunsch" zu variieren und jeweils entsprechend der zu schneidenden Kontur zu optimieren.

Bei einer weiteren bevorzugten Ausführungsform der Erfindung ist die Walzeinrichtung um die Längsachse des Erodierdrahtes drehbar (Anspruch 3). Eine drehbare Walzeinrichtung kann mit der Dreheinrichtung mitgedreht werden. Damit besitzt der gewalzte Draht stets die Ausrichtung der Dreheinrichtung und der bereits gewalzte Draht muß nicht in sich gedreht werden. Besonders vorteilhaft ist dies dadurch realisierbar, die Walzeinrichtung mit der Dreheinrichtung zu koppeln (Anspruch 4). Damit ist gewährleistet, daß die Drehungen der Walz- und der Dreheinrichtung stets synchronisiert erfolgen.

Bei einem besonders bevorzugten Ausführungsbeispiel der Erfindung weist die Dreheinrichtung zwei drehbare Drahtführungen auf (Anspruch 5). Damit ergeben sich enorm vorteilhafte Möglichkeiten, wenn beispielsweise die oberen und unteren Drahtführungen entsprechend einer Vorgabe passend zur Schnittrichtung synchron gedreht werden. Damit ist die Ausrichtung des Drahtes zur Schnittrichtung stets kontrolliert vorgebbar. Es ist zwar bei bestimmten Schnittechniken auch denkbar, die obere und die untere Drahtführung nicht synchron zu drehen, für unkomplizierte Geometrien genügt jedoch ein Ausrichten der schmaleren Seite des flachgewalzten Drahtes zur Schnittrichtung. Auch ein konisches Schneiden komplizierter Konturen ist damit möglich.

Bei einem weiteren bevorzugten Ausführungsbeispiel der Erfindung weisen die Dreheinrichtungen jeweils einen Motorantrieb mit Getriebe auf, wobei der die Motorantriebe über die Steuereinrichtung steuerbar sind, insbesondere über einen Decoder (Anspruch 6). Über einen Motorantrieb mit Getriebe ist die Dreheinrichtung - und bei einer Ankopplung der Walzeinrichtung - auch die Walzeinrichtung voll automatisierbar. Dieses Automatisieren kann besonders vorteilhaft dadurch realisiert werden, daß der/die Motorantrieb(e) von der Steuereinrichtung mit Hilfe des Decoders drehbar sind. Über den Decoder ist eine unkomplizierte Hardwareintegration sowohl der Dreheinrichtung als auch der Walzeinrichtung in die CNC-Steuerung bzw. in den Steuerungsrechner der Elektroerosions-Schneidvorrichtung möglich.

Ein weiteres Ausführungsbeispiel der Erfindung weist einen Generator erhöhter Leistung auf (Anspruch 7). Der Begriff "erhöhte" Leistung ist in Relation zur herkömmlichen Elektroerosions-Schneidvorrichtung zu verstehen und wird der Tatsache gerecht, daß mit Hilfe eines flachen Drahtes im Vergleich zu einem runden Draht höhere Stromstärken und höhere Bearbeitungsgeschwindigkeiten realisierbar sind. Dies erhöht die Schnittgeschwindigkeit zusätzlich.

Ein weiteres besonders bevorzugtes Ausführungsbeispiel der Erfindung ist durch eine an die Steuereinrichtung angeschlossene Einrichtung zur Veränderung von Impuls- und/oder Spülparametern, insbesondere Stromparametern, in Abhängigkeit einer vorgegebenen Schnittbreite gekennzeichnet (Anspruch 8). Damit ergeben sich besonders vorteilhafte Möglichkeiten, die Schnittbreite kontrolliert zu steuern.

Schließlich weist ein weiteres besonders bevorzugtes Ausführungsbeispiel der Erfindung einen Drahtlagesensor auf (Anspruch 9). Ein derartiger Drahtlagesensor ist beispielsweise von der AG für industrielle Elektronik AGIE bekannt. Der Drahtlagesensor optimiert die Möglichkeiten, insbesondere die Genauigkeit, der vorliegenden Erfindung weiter.

Bei einer besonders bevorzugten Variante des erfindungsgemäßen Elektroerosions-Schneidverfahrens wird der Erodierdraht durch die Walzeinrichtung derart gewalzt, daß sich eine Querschnittskontur ergibt, die vier Außenseiten aufweist, wobei zwei der Außenseiten im wesentlichen geradlinig und zueinander parallel sind und zwei der Außenseiten gekrümmt sind, wodurch der gewalzte Erodierdraht einen schmaleren und einen breiteren Durchmesser erhält (Anspruch 11). Mit Hilfe eines derartigen Walzens eines kreisrunden Erodierdrahtes wird auf besonders einfache Weise eine interessante Erkenntnis ausgenutzt: das Walzen des Drahtes bewirkt - besonders anfänglich - eine größere Abnahme der Dicke des Drahtes (in Bezug auf die beim Walzen entstehende schmaleren Seiten) als eine Zunahme der "Breite" der sich beim Walzen verbreiternden Seiten.

Bei einem weiteren besonders bevorzugten Ausführungsbeispiel der Erfindung wird die Dicke der in Schnittrichtung zeigenden Seite des Erodierdrahtes in Abhängigkeit von der zu schneidenden Bahngeometrie variiert (Anspruch 12). Dies geschieht auf einfache Weise mittels der vorstehend beschriebenen Verstellmöglichkeit des Abstandes der Einzelwalzen zueinander. Besonders vorteilhaft wird das Verhältnis zwischen der schmaleren und der breiteren Seite beim Walzen des Drahtes in Abhängigkeit von Schnittgeschwindigkeit und Krümmungsradius der zu schneidenden Bahnkurve bestimmt (Anspruch 13). Je nach den vorgegebenen Bahnparametern ist der Durchmesser der in Schnittrichtung zeigenden Drahtseite - und damit indirekt die Schnittbreite - damit optimierbar.

Bei einer weiteren Variante der Erfindung wird der verformte Erodierdraht zum Durchführen eines Nachschnittes, insbesondere innerer Ecken, zumindest zeitweise mit seiner breiteren Querschnittsseite in Schnittrichtung geführt (Anspruch 14). Bei einem Nachschnitt können dann auch Winkel mit einem besonders kleinen Radius auf einfache Weise nachgeschnitten werden.

Bei einer weiteren besonders bevorzugten Variante der Erfindung wird mit dem verformten Draht eine äußere Ecke mit einem Eckwinkel ($\alpha$) insbesondere bei einem Nachschnitt im wesentlichen wie folgt geschnitten: der Erodierdraht wird über die Ecke hinausgefahren, in Abhängigkeit des zu schneidenden Eckwinkels ($\alpha$) um seine Längsachse gedreht und nach dem Drehen in der neuen Schnittrichtung fortbewegt (Anspruch 15). Damit sind auch scharfe äußere Kanten insbesondere beim Nachschneiden besonders einfach ausführbar. Ähnlich wird bei einer anderen Variante mit dem verformten Draht eine innere Ecke mit einem Eckwinkel (α) insbesondere bei einem Nachschnitt auf vorteilhafte Weise wie folgt geschnitten: der Erodierdraht wird so weit in die Ecke gefahren, daß er die neue Schnittkante erreicht, in der Ecke in Abhängigkeit des zu schneidenden Eckwinkels (α) um seine Längsachse gedreht und nach dem Drehen in der neuen Schnittrichtung fortbewegt (Anspruch 16).

Bei einer weiteren besonders bevorzugten Ausführungsform des erfindungsgemäßen Elektroerosions-Schneidverfahrens werden in Abhängigkeit der zu schneidenden Bahnkurve Impulsparameter und/oder Spülparameter, insbesondere die Stromstärke, variiert (Anspruch 17). Als besonders vorteilhaft hat es sich erwiesen, wenn die Stromstärke zum Schneiden von Kreisbögen, insbesondere kleiner Radien, derart gemindert wird, daß die Schnittbreite konstant bleibt (Anspruch 18). Im Prinzip würde sich die Schnittbreite bei konstanten Parametern beim Schneiden einer Kurve (Winkel α) nämlich bis zum Winkel α/2 hin geringfügig verbreitern und dann wieder abnehmen (durch die Geometrie bzw. das "Ausschwenken des länglichen Drahtes in der Kurve bedingt). Durch den bzw. die angegebenen Verfahrensschritte läßt sich dies effektiv vermeiden.

Nach einer bevorzugten Weiterbildung des erfindungsgemäßen Verfahrens werden Parameter zur Stromreduktion in Abhängigkeit des zu schneidenen Kreisradius in einem Steuerungsrechner mittels Berechnung geometrischer Fehlerwerte bestimmt (Anspruch 19), Dies vereinfacht das erfindungsgemäße Verfahren erheblich weiter. In besonders vorteilhafter Weise werden dabei die Parameter zur Stromreduktion in Abhängigkeit des zu schneidenen Kreisradius im Steuerungsrechner vorgespeichert (Anspruch 20). Das Berechnen der Parameter kann einmalig erfolgen, so daß während des Erodierens keine Rechenzeit für diese Berechnungen bereitgestellt werden muß. Der Anwender selbst braucht sich um derartige Berechnungen überhaupt nicht zu sorgen. Die durch die vorliegende Erfindung geschaffene "Banderosionsmaschine" (kurz: BEM genannt) erlaubt einen Bedienungskomfort, der dem herkömmlicher Drahterosionsmaschinen nicht im Gerinsten nachsteht. Im Grunde wird durch die vorliegende Erfindung auch erstmals eine Banderosionsmaschine so weit optimiert, daß sie echt universell einsetzbar ist. Dabei wird die Erosionszeit deutlich gegenüber herkömmlichen Erosionsvorrichtungen verkürzt.

Weitere bevorzugte Merkmale der Erfindung ergeben sich aus der nachfolgenden Beschreibung bevorzugter Ausführungsbeispiele. Diese Ausführungsbeispiele sind schematisch in der beigefügten Zeichnung dargestellt, die auch den Unterschied zwischen erfindungsgemäßen Vorrichtungen und dem bereits geschilderten Stand der Technik veranschaulicht.

In der Zeichnung zeigen:

Fig. 1       eine schematische Ansicht verschiedener Komponenten einer erfindungsgemäßen Elektroerosions-Schneidvorrichtung;

Fig. 2       eine weitere schematische Ansicht verschiedener Komponenten einer erfindungsgemäßen Elektroerosions-Schneidvorrichtung;

Fig. 3a       einen Querschnitt durch einen erfindungsgemäßen Erodierdraht;

Fig. 3b       einen Vergleich der Querschnitte verschieden stark gewalzter Erodierdrähte;

Fig. 4       ein Diagramm, das einen Vergleich der verschieden stark gewalzten Erodierdrähte ermöglicht;

Fig. 5a       eine Draufsicht auf einen Schnitt mit einem herkömmlichen Erodierdraht und einem herkömmlichen Erodierverfahren;

Fig. 5b       eine Draufsicht auf einen weiteren Schnitt, der mit Hilfe eines erfindungsgemäßen Erodierdrahtes und -verfahrens getätigt wird;

Fig. 6       ein Diagramm, das anhand verschieden gewalzter Drähte einen Schnittbreitenvergleich in Abhängigkeit eines zu schneidenden Kurvenradius ermöglicht;

Fig. 7       ein Diagramm, das anhand verschieden gewalzter Drähte einen Schnittbreiten-Änderungsvergleich in Abhängigkeit eines zu schneidenden Kurvenradius ermöglicht;

Fig. 8       eine Draufsicht auf einen Nachschnitt einer scharfen äußeren Kante mit einem erfindungsgemäßen Erodierdraht und einem erfindungsgemäßen Erodierverfahren;

Fig. 9a       eine Draufsicht auf einen Nachschnitt eines inneren Radius mit einem erfindungsgemäßen Erodierdraht und einem erfindungsgemäßen Erodierverfahren;

Fig. 9b       eine Draufsicht auf ein weiteres Beispiel eines Nachschnittes eines inneren Radius mit einem erfindungsgemäßen Erodierdraht und einem erfindungsgemäßen Erodierverfahren;

Fig. 10       eine Draufsicht auf einen Kurvenschnitt mit einem erfindungsgemäßen Erodierdraht und einem erfindungsgemäßen Erodierverfahren;

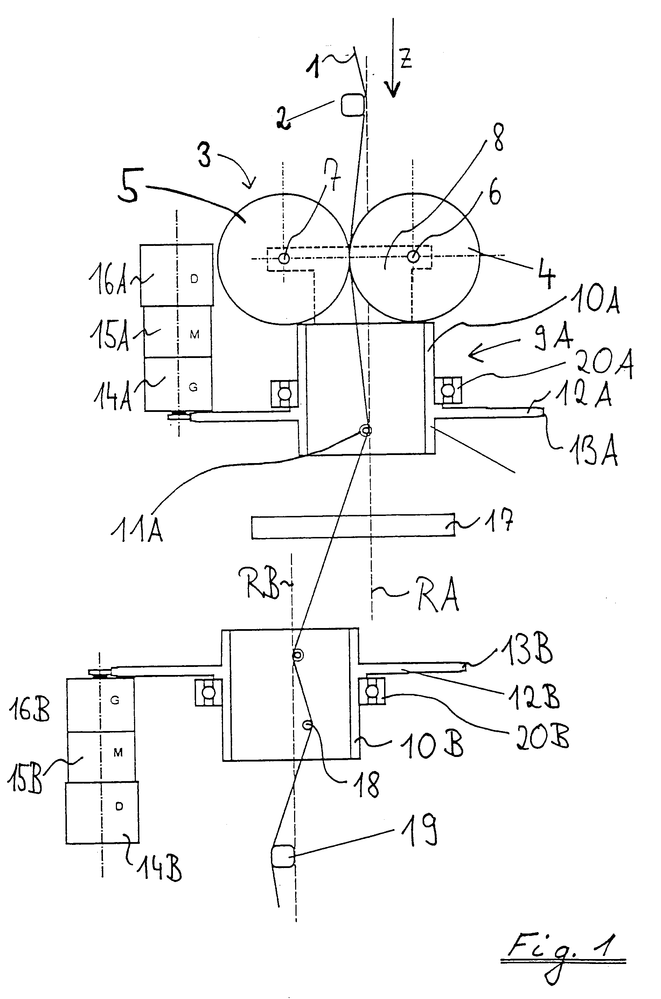

Zunächst sei das erste Ausführungsbeispiel der Fig. 1 beschrieben. Dabei wird im folgenden eine Terminologie verwendet, die der leichteren Lesbarkeit der Beschreibung dient, jedoch nicht einschränkend zu verstehen ist. Beispielsweise beziehen sich die Ausdrücke oben, unten, schmaler, breiter auf Maschinen üblicher Arbeitsaufstellung und Größe sowie auf in üblicher Weise angeordnete Werkstücke.

Fig. 1 beschränkt sich auf eine Darstellung erfindungswesentlicher Teile einer erfindungsgemäßen Elektroerosions-Schneidvorrichtung - auch **BEM** genannt. Grundelemente wie Maschinengestell mit Antrieben und Drahtsystem, Spülsystem, Generator sowie eine CNC-Rechnersteuerung sind nicht dargestellt, da sie als selbstverständlich gelten. Ein Erodierdraht 1 wird in Bezug auf die durch einen Pfeil Z dargestellte Drahttransportrichtung von "oben" nach "unten" vorgespult. Eine erste Stromzuführung 2 dient in üblicher Weise zur Zuführung der vom Generator der Elektroerosions-Schneidvorrichtung abgegebenen elektrischen Impulse. Mit einer Walzeinrichtung 3 ist es möglich, den Erodierdraht 1 zu verformen bzw. zu walzen. Die Walzeinrichtung 3 weist zwei Einzelwalzen 4, 5 auf. Der Abstand der Einzelwalzen 4, 5 zueinander ist verstellbar, beispielsweise mit Hilfe einer (nicht dargestellten) Mikrometerschraube. Diese kann z.B. über einen Motor vestellbar sein kann. Durch die Verstellung ist es möglich, den Erodierdraht 1 je nach Abstand der Einzelwalzen 4, 5 zueinander unterschiedlich stark zu walzen.

Die Walzeinrichtung 3 ist über zwei Achsen 6,7 der Einzelwalzen 4,5 an einem (gestrichelt dargestellten, da in der Zeichnung verdeckten) Arm 8 befestigt, der starr an einen ersten Teil 9a einer Dreheinrichtung gekoppelt ist. Der erste Teil 9a der Dreheinrichtung weist einen Hohlzylinder (bzw. Führungskopf) 10A auf, in dessen Innern eine erste Drahtführung 11A angeordnet ist, die der Erodierdraht 1 durchläuft.

Der Hohlzylinder 10A ist von einem Ring 12A umgeben, der an seinem äußeren Radius eine Verzahnung 13A aufweist. In die Verzahnung 13A des Ringes 12A greift ein Getriebe 14A ein, daß von einem Motor 15A antreibbar ist. Der Motor 15A kann über einen Decoder 16A bedient bzw. gesteuert werden. Als Motor kann ein Schrittmotor oder - falls ein entsprechender Regelkreis vorgesehen ist - ein Gleichstrommotor verwendet werden. Der Decoder 16A ist an einen - nicht dargestellten - CNC-Steuerungsrechner der Elektroerosions-Schneidvorrichtung angeschlossen.

Analog zeigt die Fig. 1 eine zweite Dreheinrichtung 9B mit einem Hohlzylinder 10B, einer zweiten Drahtführung 11B, einem Ring 12B, einer Verzahnung 13B, einem Getriebe 14B, einem Motor 15B und einem Decoder 16B. Der Decoder 16B ist ebenfalls an den CNC-Steuerungsrechner der **BEM** angeschlossen. Zwischen den Drahtführungen liegt die eigentliche Erosionszone, was durch ein Werkstück 17 angedeutet ist.

Gestrichelt sind die Rotationsachsen RA und RB der Dreheinrichtungen 9A und 9B zu erkennen. Die Walzeinrichtung 3 ist an der ersten Dreheinrichtung derart angeordnet, daß der Erodierdraht 1 gegenüber der Rotationsachse RA der ersten Dreheinrichtung zwischen den Einzelwalzen etwas versetzt geführt ist. Dies hat folgende Wirkung: der Erodierdraht 1 wird fest gegen die erste Drahtführung 11A und die erste Stromzuführung 2 gedrückt. Eine analoge Wirkung wird bei der zweiten Dreheinrichtung 9B gegenüber einer zweiten Stromzuführung 19 und der zweiten Drahtführung 11B durch eine Umlenkrolle 18 erzielt.

Die Lage der Dreheinrichtungen an sich - also die Lage der Rotationsachsen RA und RB - kann in bekannter Weise über an den Führungsköpfen 10A und 10B befestigte Arme 20A und 20B verstellt werden. Völlig überraschend ist die Tatsache, daß zusätzlich die Drahtführungen 11A und 11B um die Rotationsachsen RA und RB drehbar sind, bevorzugt synchron. Diese Möglichkeit mag für den einschlägigen Fachmann zunächst nahezu absurd erscheinen, ist doch das Drehen eines runden Drahtes um seine Achse sinnlos. Einen Sinn erhält dieser scheinbare Widerspruch jedoch durch die vorgeschaltete Walzeinrichtung (oder etwas eingeschränkt auch durch ein Zuführen flachen Drahtes). Bei einem flachen Draht ist die Lage des Drahtes 1 zu seiner eigenen Achse nämlich durchaus nicht sinnlos, denn sie bestimmt die Schnittbreite.

Damit ergibt sich eine völlig neue Erodiertechnik: erstmals ist es wirklich möglich, mit einer bandartigen Elektrode zufriedenstellend zu schneiden. Dabei ist der eigentliche apparative Bedarf zur Realisierung dieser Idee erstaulich gering im Vergleich zu den mit der Maschine realisierbaren Möglichkeiten.

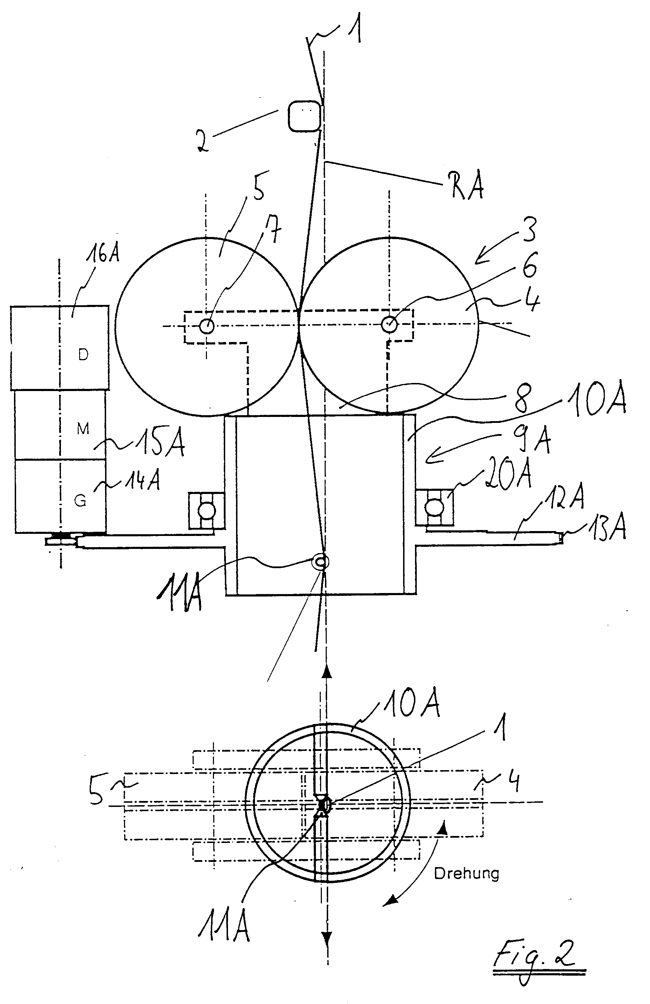

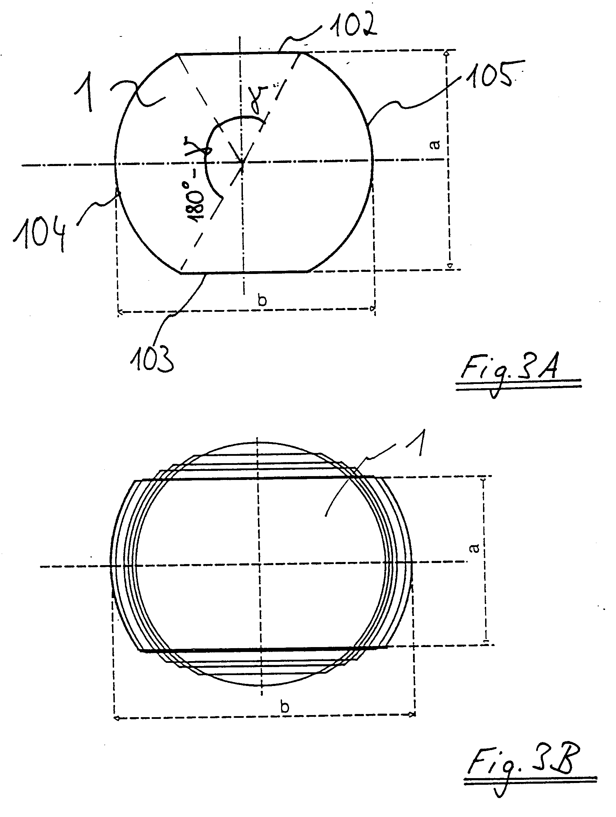

Fig. 2 zeigt im oberen Teil eine Teilvergrößerung aus Fig. 1. Im unteren Teil der Zeichnung ist rein schematisch eine Draufsicht auf den im oberen Teil der Fig. 2 gezeigten Ausschnitt angedeutet, der die Lage des Erodierdrahtes in der Drahtführung 11A gut veranschaulicht. Durch einen Pfeil ist die Drehmöglichkeit der Dreheinrichtung um die Achse des Erodierdrahtes in der Drahtführung 11A erkennbar.

Fig. 3a zeigt eine Querschnittsansicht des gewalzten Erodierdrahtes 1. Der ursprünglich kreisrunde Erodierdraht 1 besitzt infolge des Walzens eine Querschnittskontur mit vier Außenseiten 102, 103, 104, 105. Zwei der Außenseiten - 102, 103 - sind im wesentlichen geradlinig und zueinander parallel und zwei der Außenseiten - 104, 105 - sind derart gekrümmt, daß der gewalzte Erodierdraht 1 eine "schmalere" und eine "breitere" Seite aufweist. Die bestimmende Größe der Querschnittsgeometrie liegt im Verhältnis zwischen einem Durchmesser a (durch die "schmalere" Seite) und einem Durchmesser b (durch die "breitere" Seite).

Zu einem gewissen Teil beruhen die vorteilhaften Möglichkeiten der vorliegenden Erfindung auf folgender Erkenntnis: Wird ein runder Erodierdraht 1 gewalzt, wird aus der ursprünglich runden Form mit einem Radius r und einem Durchmesser $d=2r$ der Draht 1 mit der vorstehend beschriebenen Querschnittsgeometrie. D.h., es entstehen die Seiten 102, 103 mit dem Abstand a zueinander, sowie die Seiten 104, 105 mit dem Abstand b zueinander. Der Draht 1 wird hierbei um den Betrag $x=d-a$ schmaler. Da die Querschnittsfläche des Drahtes beim Walzen im wesentlichen konstant bleibt, nimmt die Breite des Drahtes um einen Betrag $y=b-d$ zu. Dabei gilt jedoch keineswegs, daß der Draht stets um den gleichen Betrag y breiter wird, um den er beim Walzen schmaler wird (Betrag x).

Besonders anschaulich ist dies in Fig. 3b zu erkennen. Es ist somit möglich, einen Bearbeitungsspalt beim Erodieren bereits durch geringes Walzen des Erodierdrahtes 1 zu verkleinern, ohne daß der Draht 1 in seiner "zweiten Richtung" b deutlich breiter wird.

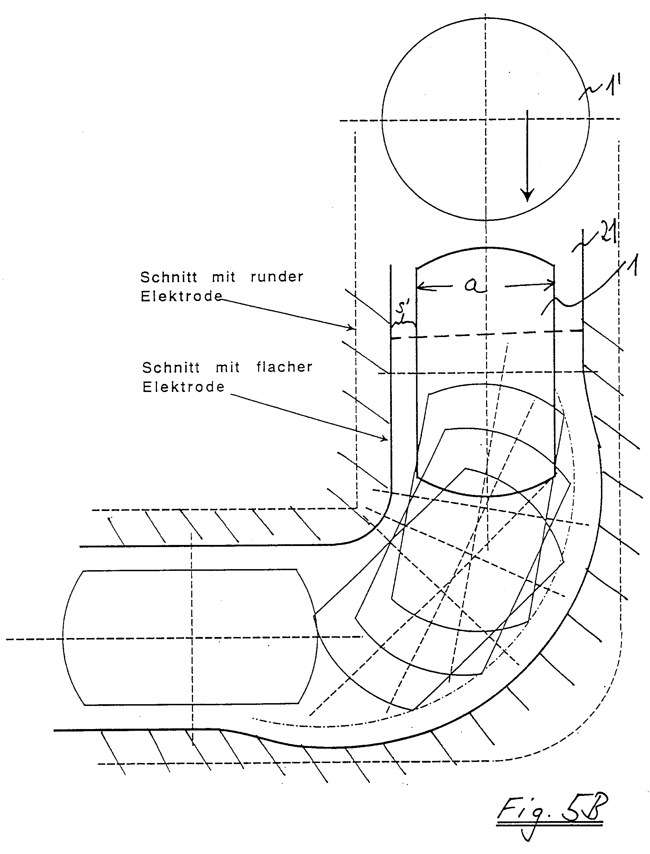

Fig. 4 verdeutlicht diese theoretische Überlegung anhand eines experimentellen Diagrammes. Der Erodierdraht 1 ist ursprünglich kreisrund und hat einen Durchmesser von 0,3 mm. Wird der Erodierdraht 1 nun um ca. x=0,017 mm schmaler gewalzt, verbreitert er sich nur um ca. 0,01 mm. Wird der Draht 1 weiter gewalzt, kehrt sich dieser Effekt allmählich um. Der Verlauf des Experimentes entspricht somit in etwa den zuvor durchgeführten theoretischen Überlegungen. Wird nun ein derartiges Meßergebnis beispielsweise als Matrix in eine Erosionsmaschine eingegeben, kann ein völlig neuer Faktor in die Erodiervorgänge einbezogen werden: die Möglichkeit, den Durchmesser des Drahtes gezielt zu verändern. Es ist zwar theoretich auch möglich, die Walzvorrichtung auf einen bestimmten Wert fest einzustellen, besondere Möglichkeiten ergeben sich jedoch durch die gezielte Verstellung der Einzelwalzen zueinander.

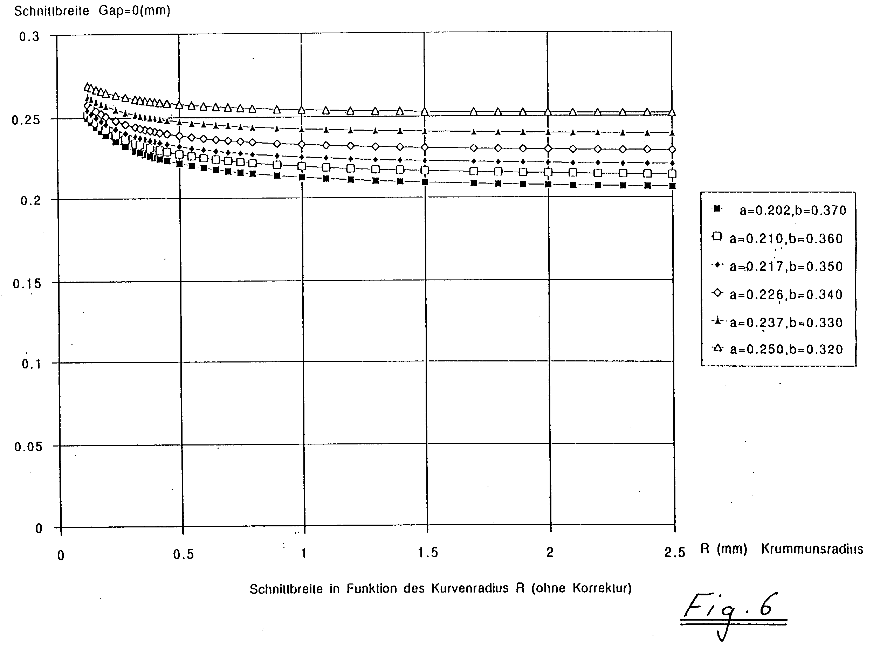

Nachfolgend werden einige bevorzugte Schnittechniken beschrieben. Fig. 5A zeigt einen Schnitt einer Ecke von 90° mit einem herkömmlichen kreisrunden Erodierdraht 1'. Ein Pfeil deutet jeweils die Schnittrichtung an. Ein dabei entstehender Bearbeitungsspalt 21 hat eine Schnittbreite t=2r+2s . In Fig. 5B ist die Situation der Fig. 5A gestrichelt dargestellt. Zusätzlich ist ein Schnitt mit einem gewalzten Draht gezeigt. Die elektrischen Parameter und die Querschnittsflächen der Drähte sind bei beiden Schnitten gleich. Die Fig. 5B ermöglicht damit einen direkten Vergleich eines Schnittes mit dem herkömmlichen kreisrunden Draht 1' und dem gewalzten Draht 1. Die Schnittbreite t'=a+2s' ist erkennbar deutlich geringer als die Schnittbreite t des runden Drahtes.

Der Draht 1 wird stets mit Hilfe der drehbaren Drahtführungen - die beispielsweise einen dem flachen Draht angepaßten Anlagebereich aufweisen - so gedreht, daß eine der schmaleren Außenseiten 104,105 in Schnittrichtung zeigt. Da sich der Querschnitt des Drahtes beim Walzen praktisch nicht verändert, kann die Erodiergeschwindigkeit deutlich erhöht werden. Dies wird zusammenfassend vor allem durch folgende Eigenschaften bestimmt:

- die verminderte Schnittbreite bei gleichem Querschnitt,
- eine Erhöhung der Kühloberfläche des Drahtes sowie eine damit verbundene höhere thermische und elektrische Belastbarkeit des Drahtes,
- eine Senkung des thermischen Widerstandes des Drahtes (Dicke).

Ein weiterer Vorteil ergibt sich dadurch, daß das Biegemoment des Drahtes in der Schnittrichtung erhöht ist - da der Draht stets mit seiner flacheren Seite in Schnittrichtung gedreht wird. Diese Erhöhung und die Verminderung der Oberfläche in Schnittrichtung bewirken eine deutlich geringere Durchbiegung des Drahtes 1 unter Erosionsdruck, was wiederum eine nochmals höhere Schnittgenauigkeit bewirkt bzw. ermöglicht.

Die Schnittbreite variiert - wie in Fig. 5B zu erkennen - selbst in einer Ecke nur unwesentlich. Die maximalen Schnittbreiten (ca. bei 45°) sind bei dem 90°-Schnitt mit rundem und flachem Draht ungefähr gleich. Es ist somit problemlos möglich, mit dem gewalzten Draht die Breite des Schnittes mit dem runden Draht gleicher Querschnittsfläche nicht zu überschreiten. Die Ecke wird zwar scheinbar nicht so scharf geschnitten wie mit einem runden Draht (zumindet bei einem Vorschnitt), diese "Schnittbreitenänderung" ist jedoch verfahrenstechnisch unproblematisch (weiter unten wird außerdem noch eine weiterer überraschender Verfahrenschritt zur Minimierung dieser Änderung aufgezeigt: eine spezielle "Kurvenstrategie").

Mit einem runden Draht von 0,3 mm kann beispielsweise ein minimaler Innenradius von 0.21 mm geschnitten werden. Der Gap und damit die Breite des Bearbeitungsspaltes beträgt ca. 0,06 mm. Ohne Problem läßt sich mit einem flachen Draht beispielsweise noch ein Innenradius von 0,36 mm schneiden. Die Schnittbreite ist zwar selbst dann, wenn der gewalzte Draht 1 stets mit seiner flacheren Seite in Schnittrichtung weist, etwas radiusabhängig. Dies ist nur bei sehr kleinen Radien überhaupt registrierbar, was sich aber in puncto Bearbeitung nicht störend auswirkt.

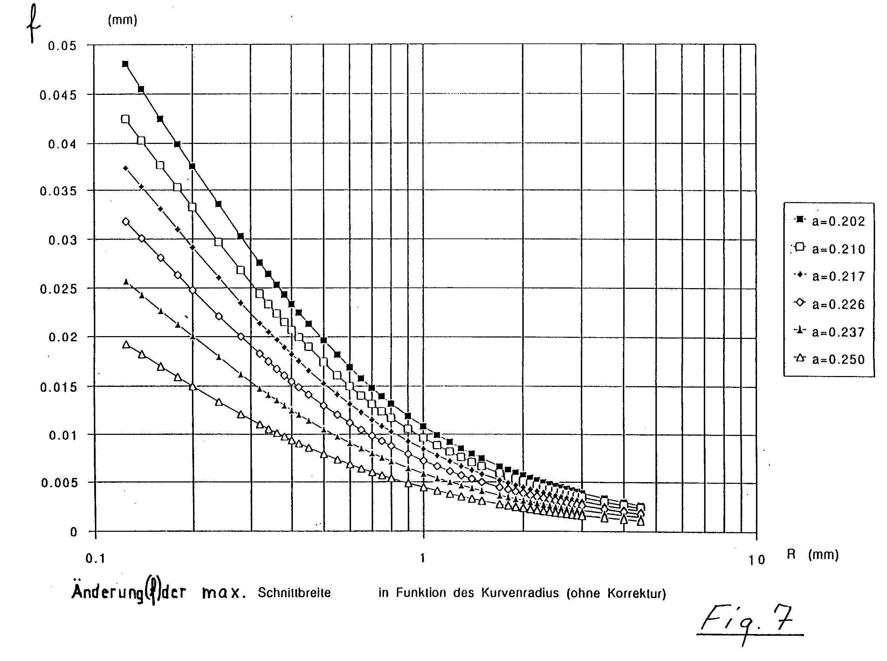

Fig. 6 zeigt in Abhängigkeit verschiedener Werte bzw. verschiedener Seitendurchmesser a gewalzter Drähte die Schnittbreite in Abhängigkeit des Krümmungsradius R einer zu schneidenden Ecke bzw. Kurve. Deutlich zu erkennen ist die Tatsache, daß sich im wesentlichen jeweils ein konstanter Wert a + ca.0,01 mm ergibt, und daß nur bei sehr kleinen Radien eine registrierbare Abweichung von dieser Konstanten auftritt.

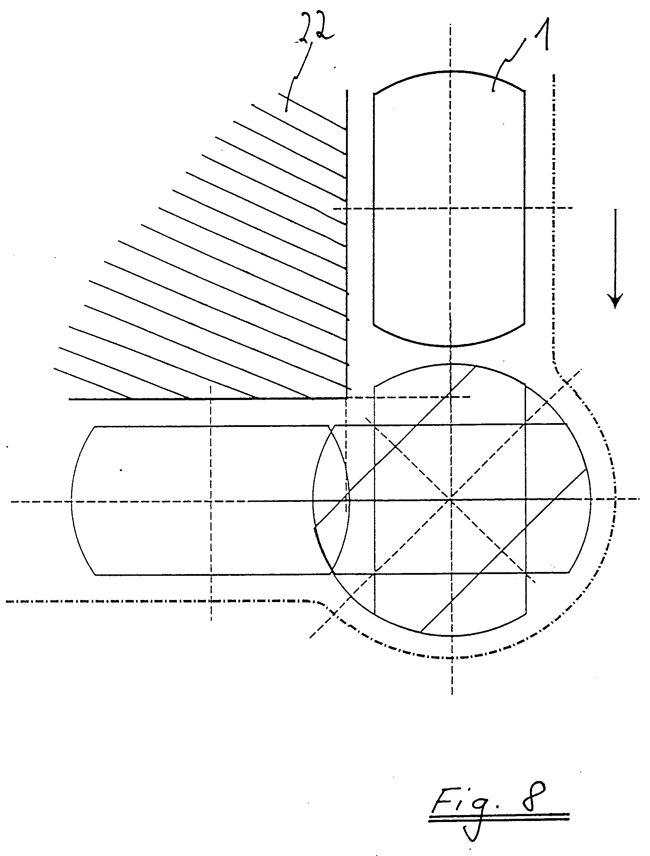

In Fig. 7 ist in einem extrem auseinander gezogenen Maßstab die resultierende Änderung der Spaltbreite verschieden stark gewalzter Drähte 1 gegen den Krümmungsradius R aufgetragen. Auch hier werden die im Grunde geringen Änderungen deutlich, die schnell gegen Null streben.

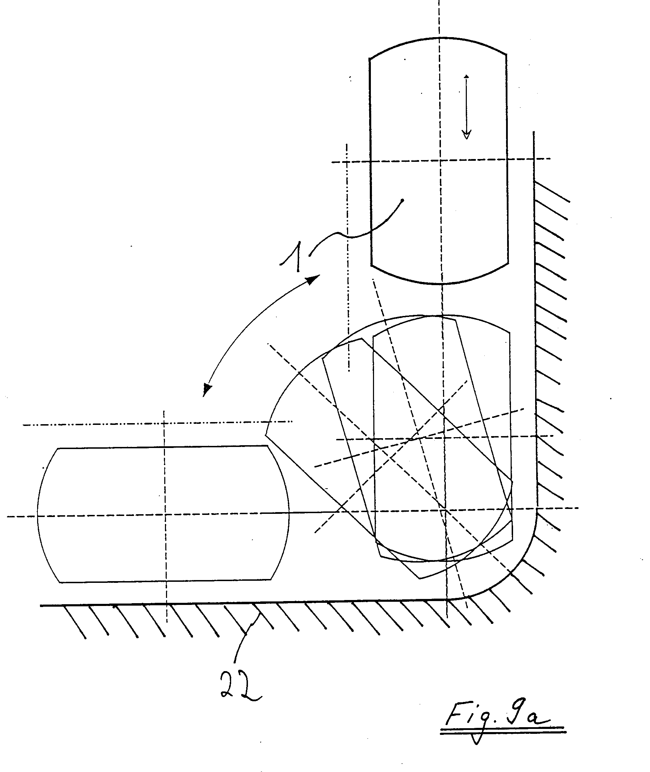

Fig. 8 zeigt einen Nachschnitt einer äußeren Ecke eines weiteren Werkstückes 22 mit dem gewalzten Draht 1. In der Ecke erfolgt an entsprechender Stelle einfach mittels der drehbaren Drahtführungen eine Drehung des Erodierdrahtes von 90° um seine Längsachse. Damit sind äußere Ecken völlig unproblematisch schneidbar.

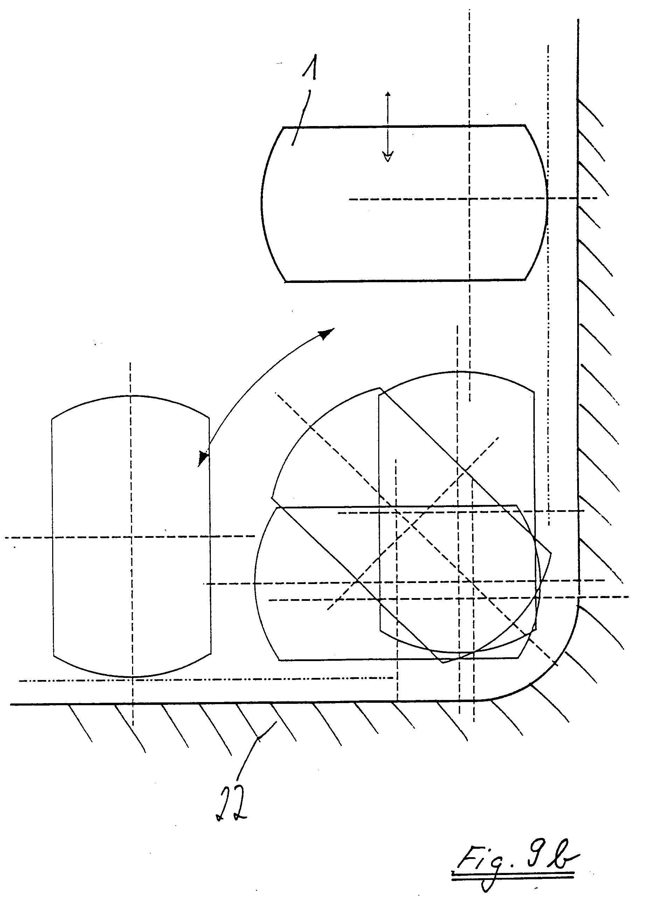

Innere Winkel können nach Fig. 9A mit geringfügigen Abweichung für sehr kleine Radien geschnitten werden. Der Draht wird dabei in der Ecke ebenfalls um den Eckwinkel - hier 90° - gedreht. Besonders vorteilhaft erfolgt ein Nachschnitt derart, daß der Draht "quer" zur Oberfläche des Werkstückes 22 steht. Eine innere Ecke wird hierbei zuerst bis zur neuen Schnittrichtung angefahren, dann wird der Draht 1 um 90° zurückgedreht und der Schnitt in der neuen Richtung fortgesetzt (Fig. 9B).

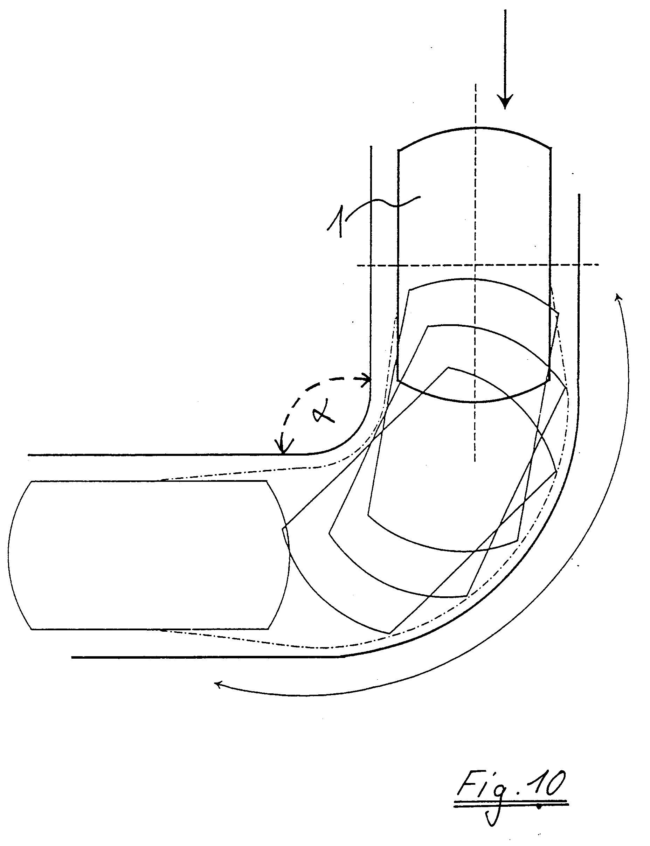

Ein weiter Möglichkeit der Erfindung besteht in einem scheinbaren Widerspruch: Fig. 10 zeigt ein Durchfahren einer Ecke mit flachem Draht 1 (mit sehr kleinem Radius) ohne Spaltverbreiterung! Auch bei einem Schnellschnitt von Konturen ist bei der Erosion eine möglichst konstante Schnittbreite wünschenswert. Eine weitere Idee der vorliegenden Erfindung besteht nun darin, auch ein Durchfahren sehr kleiner Ecken ohne eine Verbreiterung des Bearbeitungsspaltes dadurch zu ermöglichen, daß Bearbeitungsparameter beim Durchfahren von Kurven geeignet variiert werden (Anm.: Die Begriffe "Kurve" und "Ecke" sind dabei keineswegs einschränkend zu verstehen, da sich beliebige Bahnkonturen durch Geraden und Kurven annähern lassen).

Dieser Effekt ist durch eine Änderung der Impulsparameter erreichbar. Eine Änderung der maximalen Stromamplitude kann nämlich den Gap um einen Faktor 1 bis 10 ändern. Nach einer entsprechenden Weiterentwicklung der Erfindung wird die Stromamplitude zum Schneiden von Kreisbögen kleiner Radien gesenkt. Der Gap wird schmaler bzw. die Schnittbreite bleibt konstant!

Damit kann die Spaltbreitenänderung aus Fig. 7 durchaus um 0.035 mm korrigiert werden. Für die Drähte a=0.230 mm, a=0,237 mm und a=0,226 mm kann die Änderung damit z.B. vollständig kompensiert werden.

Eine entsprechende Stromreduktion kann für alle möglichen Kreisradien vorbestimmt und in der CNC als spezielle Kurvenstrategie vorgespeichert werden. Ein Technologieprozesor der CNC setzt diese Werte geeignet ein bzw. in Parameteränderungen um. Damit bleibt die Programmierung von Konturen für einen Benutzer im Vergleich zu herkömmlichen Maschinen mit kreisrunden Drähten völlig gleich.

Eine besonders einfache Methode, die nötigen Korrekturparameter zu gewinnen, besteht darin, die geometrischen Änderung im Technologieprozessor rechnerisch zu bestimmen und dann durch eine prozentuale Reduktion der für gerade Strecken gewählten Impulsamplitude diese Geometrieänderung zu kompensieren. In Matrixform können die dabei bestimmten Parameter in der CNC abgespeichert und durch eine entsprechende Software automatisch eingesetzt werden.

**Patentansprüche**

1. Elektroerosions-Schneidvorrichtung mit

   - einem in wenigstens zwei Drahtführungen (11A, 11B) geführten Erodierdraht (1),

   - einer Einrichtung (3) zum Verformen der zunächst runden Querschnittskontur des zugeführten Erodierdrahtes (1),

   - einer Dreheinrichtung (9A, 9B) zum Drehen des Erodierdrahtes (1) um seine Längsachse,

   dadurch gekennzeichnet,
   daß die Dreheinrichtung (9A, 9B) derart ausgelegt ist, daß sie über eine Steuereinrichtung so drehbar ist, daß der Erodierdraht (1) stets mit demgleichen Querschnittssektor in Vorschubrichtung weist.

2. Elektroerosions-Schneidvorrichtung nach Anspruch 1, dadurch gekennzeichnet, daß

   - die Einrichtung (3) zum Verformen zwei einander gegenüberliegende Einzelwalzen (4,5) aufweist, zwischen denen der Erodierdraht (1) geführt ist, wobei

   - der Abstand der einander gegenüberliegenden Einzelwalzen (4,5) zueinander verstellbar ist.

3. Elektroerosions-Schneidvorrichtung nach Anspruch 1 oder 2, dadurch gekennzeichnet, daß die Walzeinrichtung (3) um die Längsachse des Erodierdrahtes drehbar ist.

4. Elektroerosions-Schneidvorrichtung nach einem der Ansprüche 1 bis 3, dadurch gekennzeichnet, daß die Walzeinrichtung (3) mit der Dreheinrichtung (9A,9B) gekoppelt ist.

5. Elektroerosions-Schneidvorrichtung nach wenigstens einem der vorstehenden Ansprüche 1 bis 4, dadurch gekennzeichnet, daß die Dreheinrichtung (9A,9B) zwei drehbare Drahtführungen (11A,11B) aufweist.

6. Elektroerosions-Schneidvorrichtung nach Anspruch 5, dadurch gekennzeichnet, daß die zwei drehbaren Drahtführungen (11A, 11B) jeweils einen Motorantrieb (15A,15B) mit Getriebe (14A,14B) aufweisen, wobei der/die Motorantrieb(e) (15A,15B) über die Steuereinrichtung insbesondere über einen Decoder (16A, 16B) steuerbar sind.

7. Elektroerosions-Schneidvorrichtung nach Ansprüche 1 bis 6, gekennzeichnet durch einen Generator erhöhter Leistung.

8. Elektroerosions-Schneidvorrichtung nach einem der Ansprüche 1 bis 7, gekennzeichnet durch eine an die Steuereinrichtung angeschlossene Einrichtung zur Bestimmung und Veränderung von Impuls- und/oder Spülparametern, insbesondere Stromparametern, in Abhängigkeit einer vorgegebenen Schnittbreite.

9. Elektroerosions-Schneidvorrichtung einem der Ansprüche 1 bis 8, gekennzeichnet durch einen Drahtlagesensor.

10. Elektroerosions-Schneidverfahren zum Schneiden eines Werkstückes mittels eines Erodierdrahtes, wobei eine Elektroerosions-Schneidvorrichtung mit einem Erodierdraht beschickt wird, und der Erodierdraht vor seinem Eintritt in das Werkstück im Querschnitt verformt und mittels einer Dreheinrichtung um seine Längsachse gedreht wird, dadurch gekennzeichnet, daß der verformte Erodierdraht zum Schneiden einer Bahnkurve während des Schneidens in Abhängigkeit von der Geometrie der Bahnkurve stets so gedreht wird daß er mit dem gleichen Querschnittssektor in Schnittrichtung weist.

11. Elektroerosions-Schneidverfahren nach Anspruch 10, dadurch gekennzeichnet, daß der Erodierdraht durch eine Walzeinrichtung derart gewalzt wird, daß sich eine Querschnittskontur ergibt, die vier Außenseiten aufweist, wobei zwei der Außenseiten im wesentlichen geradlinig und zueinander parallel sind und zwei der Außenseiten gekrümmt sind, wodurch der gewalzte Erodierdraht einen schmaleren und einen breiteren Durchmesser erhält.

12. Elektroerosions-Schneidverfahren nach Anspruch 10 oder 11, dadurch gekennzeichnet, daß die Dicke einer in Schnittrichtung weisenden Seite des Erodierdrahtes in Abhängigkeit von der zu schneidenden Bahngeometrie variiert wird.

13. Elektroerosions-Schneidverfahren nach einem der Ansprüche 11 oder 12, dadurch gekennzeichnet, daß das Verhältnis zwischen der schmaleren und der breiteren Seite beim Walzen des Drahtes in Abhängigkeit von Schnittgeschwindigkeit und Krümmungsradius der zu schneidenden Bahnkurve bestimmt wird.

14. Elektroerosions-Schneidverfahren nach einem der Ansprüche 10 bis 13, dadurch gekennzeichnet, daß der verformte Erodierdraht zum Durchführen eines Nachschnittes, insbesondere innerer Ecken, zumindest zeitweise mit seiner breiteren Querschnittsseite in Schnittrichtung geführt wird.

15. Elektroerosions-Schneidverfahren nach einem der Ansprüche 10 bis 14, dadurch gekennzeichnet, daß mit dem verformten Draht eine äußere Ecke mit einem Eckwinkel ($\alpha$) insbesondere bei einem Nachschnitt im wesentlichen wie folgt geschnitten wird: der Erodierdraht wird

a) über die Ecke hinausgefahren,
b) in Abhängigkeit des zu schneidenden Eckwinkels ($\alpha$) um seine Längsachse gedreht,
c) nach dem Drehen in der neuen Schnittrichtung fortbewegt.

16. Elektroerosions-Schneidverfahren nach einem der Ansprüche 10 bis 15, dadurch gekennzeichnet, daß mit dem verformten Draht eine innere Ecke mit einem Eckwinkel ($\alpha$) insbesondere bei einem Nachschnitt wie folgt geschnitten wird: der Erodierdraht wird

a) so weit in die Ecke gefahren, daß er die neue Schnittkante erreicht,
b) in der Ecke in Abhängigkeit des zu schneidenden Eckwinkels ($\alpha$) um seine Längsachse gedreht,
c) nach dem Drehen in der neuen Schnittrichtung fortbewegt.

17. Elektroerosions-Schneidverfahren nach einem der Ansprüche 10 bis 16, dadurch gekennzeichnet, daß in Abhängigkeit der zu schneidenden Bahnkurve Impulsparameter und/oder Spülparameter, insbesondere die Stromstärke, variiert werden.

18. Elektroerosions-Schneidverfahren nach einem der Ansprüche 10 bis 17, dadurch gekennzeichnet, daß die Stromstärke zum Schneiden von Kreisbögen, insbesondere kleiner Radien, derart gesenkt wird, daß die Schnittbreite konstant bleibt.

19. Elektroerosions-Schneidverfahren nach Anspruch 18, dadurch gekennzeichnet, daß die Parameter zur Stromreduktion in Abhängigkeit des zu schneidenen Kreisradius in einem Steuerungsrechner mittels Berechnung geometrischer Fehlerwerte bestimmt werden.

20. Elektroerosions-Schneidverfahren nach Anspruch 18 oder 19, dadurch gekennzeichnet, daß die Parameter zur Stromreduktion in Abhängigkeit des zu schneidenen Kreisradius im Steuerungsrechner vorgespeichert werden.

21. Elektroerosions-Schneidverfahren nach einem der Ansprüche 10 bis 20, dadurch gekennzeichnet, daß

- die Walzeinrichtung an die Dreheinrichtung gekoppelt wird, insbesondere an die obere Drahtführung,
- die zwei drehbaren Drahtführungen durch einen Motorantrieb mit Getriebe, insbesondere mit einem vorgeschalteten Decoder, gedreht werden, und
- die Walzeinrichtung und die Dreheinrichtung von einer Steuerungseinrichtung gesteuert werden.

22. Elektroerosions-Schneidverfahren nach einem der Ansprüche 10 bis 21, dadurch gekennzeichnet, daß beim Schneiden eine im Vergleich zu einem runden Erodierdraht erhöhte Leistung zur Erzielung einer höheren Schnittgeschwindigkeit verwendet wird.

## Claims

1. Electroerosion cutting device having

   - an eroding wire (1) guided in at least two wire guides (11A, 11B),
   - a device (3) for deforming the initially round cross-sectional contour of the supplied eroding wire (1),
   - a turning device (9A, 9B) for turning the eroding wire (1) about its longitudinal axis,

   characterised in that
   the turning device (9A, 9B) is designed such that through a control device it can be turned so that the eroding wire (1) always points in the direction of advancement with the same cross-sectional sector.

2. Electroerosion cutting device according to Claim 1, characterised in that

   - the device (3) for deforming has two single rollers (4, 5) located opposite one another, between which the eroding wire (1) is guided, wherein
   - the distance of the single rollers (4, 5) with respect to one another is adjustable.

3. Electroerosion cutting device according to Claim 1 or 2, characterised in that the roller device (3) is rotatable about the longitudinal axis of the eroding wire.

4. Electroerosion cutting device according to one of the Claims 1 to 3, characterised in that the roller device (3) is coupled to the turning device (9A, 9B).

5. Electroerosion cutting device according to at least one of the preceding Claims 1 to 4, characterised in that the turning device (9A, 9B) has two rotatable wire guides (11A, 11B).

6. Electroerosion cutting device according to Claim 5, characterised in that each of the two rotatable turning devices (11A, 11B) has a motor drive (15A, 15B) with gear unit (14A, 14B), the motor drive(s) (15A, 15B) being controllable through the control device, especially through a decoder (16A, 16B).

7. Electroerosion cutting device according to Claims 1 to 6, characterised by a generator of increased power.

8. Electroerosion cutting device according to one of the Claims 1 to 7, characterised by a device connected to the control device for determining and changing pulse and/or flushing parameters, especially current parameters, as a function of a predetermined cut width.

9. Electroerosion cutting device according to one of the Claims 1 to 8, characterised by a wire position sensor.

10. Electroerosion cutting method for cutting a workpiece by means of an eroding wire, wherein an electroerosion cutting device is loaded with an eroding wire, and the eroding wire is deformed in cross section before its entrance into the workpiece and turned about its longitudinal axis by means of a turning device, characterised in that for cutting a curve in the path, the deformed eroding wire during the cutting as a function of the geometry of the curve in the path is always turned so that it points in the cut direction with the same cross-sectional sector.

11. Electroerosion cutting method according to Claim 10, characterised in that the eroding wire is rolled by a roller device in such a way that a cross-sectional contour results which has four outer sides, two of the outer sides being essentially rectilinear and parallel to one another and two of the outer sides being curved, as a result of which the rolled eroding wire obtains a narrower and a broader diameter.

12. Electroerosion cutting method according to Claim 10 or 11, characterised in that the thickness of one side of the eroding wire pointing in the cut direction is varied as a function of the geometry of the path to be cut.

13. Electroerosion cutting method according to one of the Claims 11 or 12, characterised in that the ratio between the narrower and the broader side is determined during rolling of the wire as a function of the cutting speed and radius of curvature of the curve of the path to be cut.

14. Electroerosion cutting method according to one of the Claims 10 to 13, characterised in that for carrying out a recut, especially of inner corners, the deformed eroding wire is guided at least at times by its wider cross-sectional side in the cut direction.

15. Electroerosion cutting method according to one of the Claims 10 to 14, characterised in that an external corner having a corner angle ($\alpha$) is cut with the deformed wire especially in the case of a recut essentially as follows: the eroding wire is

    a) moved beyond the corner,
    b) turned about its longitudinal axis as a function of the corner angle ($\alpha$) to be cut,
    c) moved on after the turning in the new cut direction.

16. Electroerosion cutting method according to one of the Claims 10 to 15, characterised in that an inner corner having a corner angle ($\alpha$) is cut with the deformed wire especially in the case of a recut as follows:
the eroding wire is

a) moved so far into the corner that it reaches the new cut edge,
b) is turned about its longitudinal axis in the corner as a function of the corner angle ($\alpha$) to be cut,
c) moved on after the turning in the new cut direction.

17. Electroerosion cutting method according to one of the Claims 10 to 16, characterised in that pulse parameters and/or flushing parameters, especially the current intensity, are varied as a function of the curve of the path to be cut.

18. Electroerosion cutting method according to one of the Claims 10 to 17, characterised in that for the cutting of arcs of a circle, of small radii especially, the current intensity is reduced in such a way that the cut width remains constant.

19. Electroerosion cutting method according to Claim 18, characterised in that the parameters for current reduction are determined as a function of the circular radius to be cut in a control computer by means of the calculation of geometric error values.

20. Electroerosion cutting method according to Claim 18 or 19, characterised in that the parameters for current reduction are stored in advance in the control computer as a function of the circular radius to be cut.

21. Electroerosion cutting method according to one of the Claims 10 to 20, characterised in that

- the roller device is coupled to the turning device, especially to the upper wire guide,
- the two rotatable wire guides are turned by means of a motor drive with a gear unit, especially with a preceding decoder, and
- the roller device and the turning device are controlled by a control device.

22. Electroerosion cutting method according to one of the Claims 10 to 21, characterised in that when cutting, an increased power by comparison with a round eroding wire is used for achieving a higher cutting speed.

**Revendications**

1. Dispositif de découpage par électro-érosion comportant

- un fil à éroder (1) guidé dans au moins deux guidages de fil (11A, 11B)
- un organe (3) pour mettre en forme le contour de la section, tout d'abord rond, du fil à éroder amené (1)
- un organe de rotation (9A, 9B) pour faire tourner le fil à éroder (1) autour de son axe longitudinal,

caractérisé
par le fait que l'organe de rotation (9A, 9B) est conçu de façon que, au moyen d'un organe de commande, il puisse être entraîné en rotation de façon que le fil à éroder (1) se présente avec le même secteur de coupe dans le sens de l'avance.

2. Dispositif de découpage par électro-érosion selon la revendication 1, caractérisé par le fait que

- l'organe (3) de formage présente deux rouleaux individuels (4, 5) qui sont situés en face l'un de l'autre et entre lesquels le fil à éroder (1) est guidé,
- la distance, entre eux, des rouleaux individuels (4, 5) situés en face l'un de l'autre, étant réglable.

3. Dispositif de découpage par électro-érosion selon la revendication 1 ou 2, caractérisé par le fait que l'organe de laminage (3) peut tourner autour de l'axe longitudinal du fil à éroder.

4. Dispositif de découpage par électro-érosion selon la revendication 1 à 3, caractérisé par le fait que l'organe de laminage (3) est couplé avec l'organe de rotation (9A, 9B).

5. Dispositif de découpage par électro-érosion selon au moins l'une des revendications précédentes 1 à 4, caractérisé par le fait que l'organe de rotation (9A, 9B) présente deux guidages du fil (11A, 11B) qui peuvent tourner.

6. Dispositif de découpage par électro-érosion selon la revendication 5, caractérisé par le fait que les deux guidages du fil (11A, 11B) qui peuvent tourner présentent chacun un mécanisme d'entraînement motorisé (15A, 15) avec réducteur (14A, 14B), le/les mécanisme(s) d'entraînement (15A, 15B) pouvant être commandés par l'intermédiaire d'un organe de commande, en particulier par l'intermédiaire d'un décodeur (16A, 16B).

7. Dispositif de découpage par électro-érosion selon les revendications 1 à 6, caractérisé par un générateur de puissance accrue.

8. Dispositif de découpage par électro-érosion selon l'une des revendications 1 à 7, caractérisé par un organe, relié à l'organe de commande, pour déterminer et modifier des paramètres d'impulsion et/ou d'arrosage, en particulier des paramètres d'intensité, en fonction d'une largeur de découpage prescrite.

9. Dispositif de découpage par électro-érosion selon l'une des revendications 1 à 8, caractérisé par un détecteur de la position du fil.

10. Procédé de découpage par électro-érosion pour découper une pièce à usiner au moyen d'un fil à éroder, dans lequel un dispositif de découpage par électro-érosion est alimenté en fil à éroder et dans lequel le fil à éroder, avant son entrée dans la pièce à usiner, est mis en forme en coupe et mis en rotation autour de son axe longitudinal au moyen d'un organe de rotation,
   caractérisé par le fait que le fil à éroder, mis en forme, pour découper un parcours courbe, est, pendant le découpage, mis en rotation en fonction des caractéristiques géométriques du parcours courbe de façon à faire face à la direction du découpage avec le même secteur de sa section.

11. Procédé de découpage par électro-érosion selon la revendication 10, caractérisé par le fait que le fil à éroder est laminé par un organe de laminage de façon telle que l'on obtient un contour de section qui présente quatre côté extérieurs, deux des côtés extérieurs étant sensiblement rectilignes et parallèles l'un à l'autre et deux des côtés extérieurs étant incurvés, de sorte que le fil érodé, laminé, présente un diamètre plus étroit et un diamètre plus large.

12. Procédé de découpage par électro-érosion selon la revendication 10 ou la revendication 11, caractérisé par le fait que l'on fait varier l'épaisseur du côté du fil à éroder, qui fait face à la direction des découpages, en fonction des caractéristiques géométriques du parcours à découper.

13. Procédé de découpage par électro-érosion selon l'une des revendications 11 ou 12, caractérisé par le fait que le rapport entre le côté le plus étroit et le côté le plus large lors du laminage du fil est déterminé en fonction de la vitesse de découpage et du rayon de courbure du parcours courbe à découper.

14. Procédé de découpage par électro-érosion selon l'une des revendications 10 à 13, caractérisé par le fait que, pour exécuter un découpage en reprise, en particulier d'angles intérieurs, le fil à éroder, mis en forme, est guidé au moins temporairement avec le côté le plus large de sa section dans la direction du découpage.

15. Procédé de découpage par électro-érosion selon l'une des revendications 11 à 14, caractérisé par le fait qu'avec le fil, mis en forme, on découpe essentiellement comme suit un angle extérieur d'angle (α), en particulier dans le cas d'un découpage en reprise:

   a) le fil à éroder est amené le long de l'angle,
   b) on le fait tourner autour de son axe longitudinal en fonction de l'angle (α) à découper,
   c) après rotation il poursuit le parcours dans la nouvelle direction de découpage.

16. Procédé de découpage par électro-érosion selon l'une des revendications 10 à 15, caractérisé par le fait qu'avec le fil, mis en forme, on découpe comme suit un angle extérieur d'angle (α), en particulier dans le cas d'un découpage en reprise:

   a) on fait avancer le fil dans l'angle jusqu'à ce qu'il atteigne la nouvelle arête de découpage,
   b) dans l'angle, on le fait tourner autour de son axe longitudinal en fonction de l'angle (α) à découper,
   c) après rotation, il poursuit le parcours dans la nouvelle direction de découpage.

17. Procédé de découpage par électro-érosion selon l'une des revendications 10 à 16, caractérisé par le fait que l'on fait varier le paramètre d'impulsion et/ou le paramètre d'arrosage, en particulier l'intensité, en fonction du parcours courbe à découper.

18. Procédé de découpage par électro-érosion selon l'une des revendications 10 à 17, caractérisé par le fait que, pour découper des arcs de cercle, en particulier de petits rayons, l'intensité s'abaisse de façon que la largeur de coupe reste constante.

19. Procédé de découpage par électro-érosion selon la revendication 18, caractérisé par le fait que les paramètres pour la réduction de l'intensité en fonction du rayon du cercle à découper sont déterminés dans un calculateur de commande au moyen d'un calcul d'erreurs géométriques.

20. Procédé de découpage par électro-érosion selon la revendication 18, caractérisé par le fait que les paramètres pour la réduction de l'intensité en fonction du rayon du cercle à découper sont mémorisés à l'avance dans le calculateur de commande.

21. Procédé de découpage par électro-érosion selon l'une des revendications 10 à 20, caractérisé par le fait que

   - l'organe de laminage est couplé à l'organe de rotation, en particulier sur le guidage supérieur du fil,
   - les deux guidages tournants du fil sont entraînés en rotation par un mécanisme d'entraînement motorisé avec réducteur, en particulier avec un décodeur monté en amont et

- l'organe de laminage et l'organe de rotation sont commandés par un organe de commande.

22. Procédé de découpage par électro-érosion selon l'une des revendications 10 à 21, caractérisé par le fait que, pour le découpage, pour obtenir une vitesse de coupe plus élevée, on emploie une puissance accrue en comparaison d'un fil à éroder rond.

Fig. 1

*Fig. 2*

*Fig. 3A*

*Fig. 3B*

Draht 0.3 mm Durchmesser gewalzt    b = f(a)

*Fig. 4*

Schnittbreite $t$

Fig.5A

Schnitt mit runder
Elektrode

Schnitt mit flacher
Elektrode

Fig. 5B

Schnittbreite Gap=0(mm)

Schnittbreite in Funktion des Kurvenradius R (ohne Korrektur)

**Fig. 6**

Legend:
- a=0.202,b=0.370
- a=0.210,b=0.360
- a=0.217,b=0.350
- a=0.226,b=0.340
- a=0.237,b=0.330
- a=0.250,b=0.320

R (mm) Krummunsradius

EP 0 585 715 B1

Änderung(f)der max. Schnittbreite in Funktion des Kurvenradius (ohne Korrektur)

*Fig. 7*

EP 0 585 715 B1

22 1

Fig. 8

Fig. 9a

1

22

*Fig. 9b*

Fig. 10